Europäisches Patentamt

(19) European Patent Office

Office européen des brevets

(11) Publication number : **0 114 789**
**B1**

(12) **EUROPEAN PATENT SPECIFICATION**

(45) Date of publication of patent specification :
25.03.87

(21) Application number : **84830004.2**

(22) Date of filing : **09.01.84**

(51) Int. Cl.⁴ : **B 60 S   1/56**, B 60 S   1/48

(54) **Separable connecting device for conduits for conveying liquids particularly feeding conduits of windscreen wipers of motor vehicles.**

(30) Priority : **20.01.83 IT 5286283 U**

(43) Date of publication of application :
**01.08.84 Bulletin 84/31**

(45) Publication of the grant of the patent :
**25.03.87 Bulletin 87/13**

(84) Designated contracting states :
**DE FR GB SE**

(56) References cited :
**DE-B- 2 219 684**
**GB-A- 1 580 926**

(73) Proprietor : **FIAT AUTO S.p.A.**
**Corso Giovanni Agnelli 200**
**I-10135 Torino (IT)**

(72) Inventor : **Cavalla, Marcello**
**Frazione Taverna 92**
**I-14018 Villafranca d'Asti (Asti) (IT)**

(74) Representative : **Bosotti, Luciano et al**
**c/o Jacobacci-Casetta & Perani S.p.A. Via Alfieri, 17**
**I-10121 Torino (IT)**

## Description

The present invention relates to devices for connecting two portions of tube for supplying washing liquid to the window washer associated with the rear window in a rear hatchback door of the body of a motor vehicle.

One current solution in this respect is to provide for the nozzle of the window washer to be connected to the pump circuit for the washing liquid (which normally terminates at the window washing pump for the windscreen) through a long flexible tube which passes through the hinge region of the rear hatchback to the « fixed » part of the body.

The present invention relates particularly to a device which can be used in a case in which one of the tube portions extends within a part of the vehicle body which is movable from a normal position of use.

The inherent problem of the present invention is that of providing a separable connecting device which connects the tube portion mounted on the fixed part of the body to the tube portion mounted on the movable part (the rear hatchback part) of the body itself only when this movable part is in its normal position of use, that is to say, when the hatchback is in its closed position.

In this way a significant reduction can be achieved in the length of the supply tube for the spray nozzle of the window washer. The nozzle (preferably located adjacent the lower edge of the window) may in fact be supplied through a short tube portion which can be connected, through the separable connector according to the invention, to the pumping circuit for the washing liquid in correspondence with the lower edge of the hatchback door.

All this makes the use of the window washer particularly effective and convenient, especially when it is remembered that no portion of the supply tube is bent as a result of the opening of the door, which could result in rupture of the tube, in contrast to devices currently used.

The inherent problem outlined above is solved, according to the present invention, with a device as set forth in the pre-characterising portion of Claim 1, having the further characteristics indicated in points a) and b) of the characterising portion of the same claim. Of these, characteristic a) appears to be known per-se from DE-B-2 219 684 in connection with the problem of conveying air between units of a train of rail vehicles. A somewhat similar connection is also shown in GB-A-1 580 926 for the transmission of mechanical power to a wiper for a rear window of a motor vehicle.

Further advantages and characteristics of the invention will become apparent from the description which follows, given purely by way of nonlimiting example, with reference to the appended drawings, in which :

Figure 1 illustrates a device according to the invention in the disposition in which it is fitted to the supply tube for the window washer associated with the rear window of the rear hatchback door of a motor vehicle, and

Figure 2 is an axial sectional view illustrating the component parts of the device illustrated in Figure 1 on an enlarged scale.

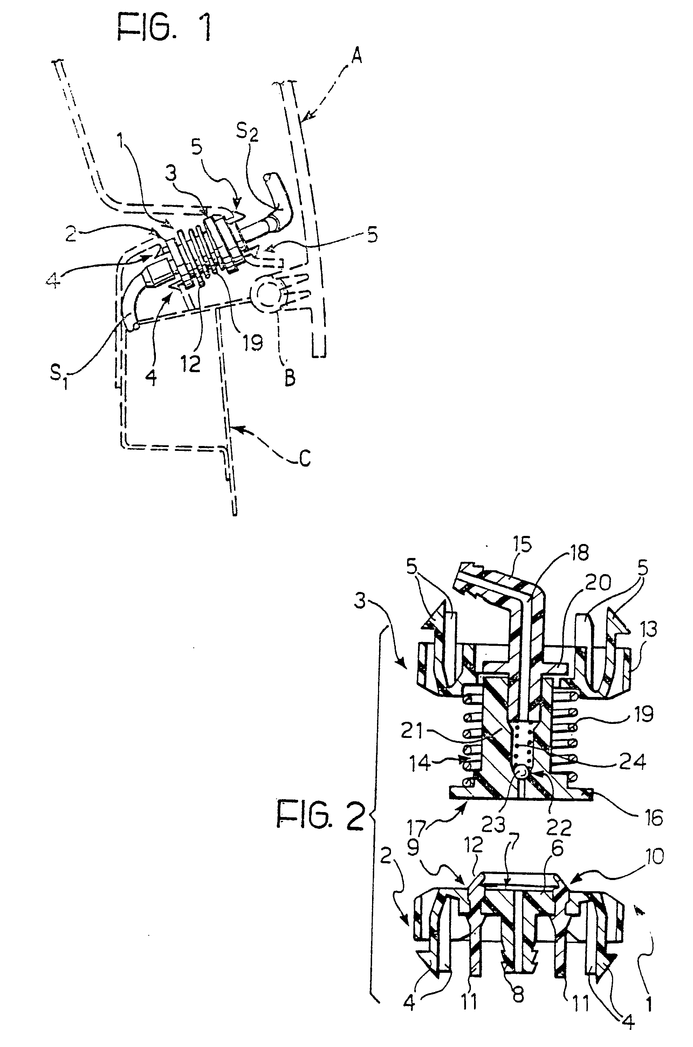

In Figure 1 the lower part of the rear hatchback door of the body of a motor vehicle not illustrated in its entirety, is generally indicated A.

The door is illustrated in its closed position in which the lower part A bears, with the interposition of a weather-strip B, against a box section (transverse member) C defining the lower side of the aperture of the body with which the door is associated.

Two tube portions are indicated $S_1$ and $S_2$ for supplying washing liquid to the spray nozzle of the window washer associated with the rear window mounted in the hatchback door (not illustrated).

The washing liquid is supplied under pressure to the portion $S_1$ of the tube mounted on the fixed part of the body and terminating at a pump device (not illustrated) which is normally constituted by the pump of the window washer acting on the windscreen of the motor vehicle.

The pressurised liquid is transferred to the tube portion $S_2$ through a connector generally indicated 1.

The connector 1 is constituted by two complementary bodies indicated 2 and 3 respectively and illustrated on an enlarged scale and in axial section in Figure 2.

Each of the bodies 2 and 3, normally formed of plastics material, has an approximately tubular structure and is provided with resilient profiled lugs indicated 4 and 5 respectively. These resilient lugs allow the snap insertion of the body 2 and the body 3 within respective mounting apertures provided in the cross member C and in the lower part A of the door as shown schematically in Figure 1.

At its end opposite the cross member C in the assembled position, the body 2 is closed by an end wall 6 having a flat outer face 7. This flat face 7 has a central through hole constituting one end of the axial cavity of a tubular spigot 8 which extends from the end wall 6 in the same direction as the lugs 4. The tubular spigot 8 constitutes a connector which allows the connection of the body 2 to the portion $S_1$ of the tube to act as a terminal element.

The flat front face 7 of the body 2 has an annular recess 9 coaxial with the cavity of the spigot 8 and forming a seat housing a resilient sealing ring generally indicated 10.

The ring 10 has lugs 11 which extend through apertures provided in the end wall 6 so as to ensure the correct assembly of the ring 10 within the recess 9.

On the opposite side to the lugs 11, the ring 10 also has a highly yieldable lip portion 12.

The body 3 includes an annular part 13 carrying the lugs 5 which allow its snap engagement on the lower part A of the hatchback door. A movable tubular part 14 is slidable axially within the part 13 and has, at its end intended to face the lower part A of the hatchback door of the motor vehicle, a connector 15 which can be connected to the tube portion $S_2$ for supplying the window washer. The connector 15 is L-shaped which allows it to be connected easily to the tube portion $S_2$ even in very restricted spaces.

At its opposite end, the movable part 14 of the body 3 has an enlarged head 16 with a flat front face 17 having dimensions approximately corresponding to the dimensions of the front face 7 of the body 2.

The movable part 14 of the body 3 also has an axial through hole 18 the end of which opposite the connector 15 passes through the enlarged head 16.

The position of the holes in which the bodies 2 and 3 are snap-engaged with the cross member C and the lower part A of the hatchback door respectively and the position of the axial cavities in the lug 8 of the body 2 and in the movable part 14 of the body 3 are chosen so that when the hatchback door is in its closed position, the bodies 2 and 3 are located opposite one another with the respective axial cavities aligned with each other.

A helical spring indicated 19 bears at one end against the enlarged head 16 of the movable part 14 and at its other end against the edge of the central aperture of the annular part 13 of the body 3.

The spring 19 thus acts in compression and biases parts 13 and 14 apart into the position corresponding to the maximum axial extension of the body 3 itself.

The condition of maximum axial extent of the body 3 which thus has a telescopic structure is defined by the bearing of a peripheral flange 20 of the movable part 14 against the edge of the central aperture of the annular part 13.

In the embodiment illustrated, the movable part 14 of the body 3 is constituted by two elements connected together. One of these elements comprises the enlarged head 16 and a sleeve 21 and is engaged in the central aperture of the annular part 13, to form a coupling which allows axial movement of the movable part 14 while simultaneously preventing its rotation relative to the annular part 13.

In correspondence with the sleeve 21, the axial through hole 18 of the movable part 14 has a conical shoulder 22 forming a seat for receiving a ball 23 which is pressed against the shoulder by a helical spring 24 which, at its end opposite the ball 23, bears against the end face of the other element constituting the movable part 14. This element, which has the peripheral flange 20, is tubular which allows it to be introduced into the sleeve 21 until it reaches a final engagement position substantially corresponding to the bearing of the flange 20 against the end face of the sleeve 21 opposite the enlarged head 16.

In the position of disengagement of the body 2 corresponding to the opening of the hatchback door, the body 3 is disposed in the position of maximum axial extent illustrated in Figure 2.

When the door is closed, that is to say, when the door is in its normal position of use, the body 3 is brought to bear against the body 2 as shown schematically in Figure 1.

The helical spring 19 is thus axially compressed so that the movable portion 14 of the body 3 is pressed against the end wall 6 of the body 2.

The sealing element 10, and particularly the lip portion 12, is thus compressed between the opposite faces 7 and 17 of the bodies 2 and 3 ensuring the sealed interconnection of the two bodies 2, 3 constituting the connector.

The washing liquid coming from the tube portion $S_1$ may thus flow through the axial cavity in the tubular spigot 8 into the disc-shaped chamber defined by the faces 7 and 17 and the sealing element 10, then to pass through the axial hole 18 in the movable part 14 of the body 3 into the tube portion $S_2$ connected, at the opposite end to the connector 15, to the spray nozzle of the window washer.

Under the force of the pressure of the washing liquid, the ball 23 is moved away from the shoulder 22 against the return force exerted by the spring 24 so as not to obstruct the flow of washing liquid towards the spray nozzle.

On the contrary, when the hatchback door is in its open position and the bodies 2, 3 are separated from each other, the assembly constituted by the shoulder 22, the ball 23 and the spring 24 constitute an automatic ball valve which prevents the flow of washing liquid out of the tube portion $S_2$, preventing this liquid escaping and, for example, dropping into the passenger compartment of the motor vehicle.

## Claims

1. Device for connecting two portions of a tube for supplying washing liquid to the window washer associated with the rear window in a rear hatchback door of the body of a motor vehicle, in which one of the tube portions extends in a part of the vehicle body which is movable from a normal position of use, characterised in that :

a) in a manner known-per-se, two tubular complementary bodies (2, 3) are provided each having a substantially flat end face (7, 17), the bodies (2, 3) being attachable as terminal elements respectively to one ($S_1$) and the other ($S_2$) of the tube portions in an arrangement such that, in the said normal position of use, the said flat faces (7, 17) are mutually opposed and an annular sealing element (10) is applied to the flat face (7) of one (2) of the complementary bodies whereby, in the said normal position of use, the said element (10) is compressed between the flat faces (7, 17) and forms a sealed connection between the two tube portions ($S_1$, $S_2$), wherein at least

one (3) of the complementary bodies comprises two parts (13, 14) coupled telescopically with each other, one (14) of which has the respective flat end face (17), the said at least one body (3) having associated resilient means (19) which tends to maintain the said two parts (13, 14) in the position corresponding to the maximum axial extension of the body (3) itself, whereby, in the said normal position of use, the resilient means (19) force the flat end face (17) of the said at least one body (3) against the flat end face (7) of the other complementary body (2), and

   · b) at least one (3) of the complementary bodies has associated therewith one-way-flow valve means (22, 23, 24) which can prevent liquid from flowing out of the respective tube portion ($S_2$) when the complementary bodies (2, 3) are separated from each other as a result of the movement of the said movable part (A) of the vehicle body from the normal position of use.

2. Device according to Claim 1, characterised in that the sealing element (10) includes a resiliently deformable lip portion (12).

3. Device according to Claim 1 or Claim 2, characterised in that the valve means comprise an automatic ball valve (22, 23, 24).

4. Device according to Claim 1, characterised in that each of the complementary bodies (2, 3) has profiled resilient lugs (4, 5) which allow its snap engagement in the assembled position.

5. Device according to Claim 1, characterised in that each of the complementary bodies (2, 3) has a tubular connector (8, 15) for connection to the respective tube portion ($S_1$, $S_2$).

6. Device according to Claim 5, characterised in that at least one (3) of the complementary bodies has an L-shaped tubular connector (15).


**Patentansprüche**

1. Vorrichtung zur Verbindung zweier Leitungsabschnitte einer Leitung zur Zuführung von Waschflüssigkeit zu dem Scheibenwischer der Hecktürscheibe einer Kraftfahrzeugkarosserie, wobei einer der Leitungsabschnitte in einem Teil der Kraftfahrzeugkarosserie verläuft, der aus der normalen Betriebsstellung herausbewegbar ist, dadurch gekennzeichnet,

a) daß in an sich bekannter Weise zwei komplementäre rohrförmige Körper (2, 3) vorgesehen sind, die jeweils eine im wesentlichen flache Stirnfläche (7, 17) besitzen und als Anschlußelemente an dem einen (S1) bzw. dem anderen (S2) Leitungsabschnitt derart anbringbar sind, daß sie in der genannten normalen Betriebsstellung mit den flachen Stirnflächen (7, 17) einander gegenüberliegen, wobei an einer der flachen Stirnflächen (7) eines (2) der komplementären Körper ein ringförmiges Dichtungselement (10) in der Weise angebracht ist, daß es in der normalen Betriebsstellung zwischen den flachen Stirnflächen (7, 17) zusammengedrückt wird und eine dichte Verbindung zwischen den beiden Leitungsabschnitten (S1, S2) bildet, wobei ferner wenigstens einer (3) der komplementären Körper zwei teleskopisch miteinander gekoppelte Teile (13, 14) umfaßt, an deren einem (14) die betreffende flache Stirnfläche (17) ausgebildet ist und wobei an demselben Körper (3) elastische Mittel (19) vorgesehen sind, die die beiden Teile (13, 14) in die der der maximalen axialen Ausdehnung des Körpers (3) entsprechende Position vorspannen, so daß die elastischen Mittel (19) die flache Stirnfläche (17) dieses Körpers (3) in der normalen Betriebsstellung gegen die flache Stirnfläche (7) des anderen komplementären Körpers (2)˙ drücken, und

b) daß wenigstens einem (3) der komplementären Körper ein Rückschlagventil (22, 23, 24) zugeordnet ist, das den Ausfluß von Flüssigkeit aus dem betreffenden Leitungsabschnitt (S2) verhindert, wenn die komplementären Körper (2, 3) infolge des Herausbewegen des beweglichen Teils (A) der Kraftfahrzeugkarosserie aus der normalen Betriebsstellung voneinander getrennt werden.

2. Vorrichtung nach Anspruch 1, dadurch gekennzeichnet, daß das Dichtungselement (10) eine elastische verformbare Lippe (12) besitzt.

3. Vorrichtung nach Anspruch 1 oder 2, dadurch gekennzeichnet, daß das Rückschlagventil ein automatisches Kugelventil (22, 23, 24) ist.

4. Vorrichtung nach Anspruch 1, dadurch gekennzeichnet, daß jeder der beiden komplementären Körper (2, 3) elastische Profilvorsprünge (4, 5) besitzt, die ihre Montage durch Schnappverbindung ermöglichen.

5. Vorrichtung nach Anspruch 1, dadurch gekennzeichnet, daß jeder der komplementären Körper (2, 3) einen rohrförmigen Verbinder (8, 15) für die Verbindung mit dem zugehörigen Leitungsabschnitt (S1 bzw. S2) besitzt.

6. Vorrichtung nach Anspruch 5, dadurch gekennzeichnet, daß der rohrförmige Verbinder (15) wenigstens eines (3) der komplementären Körper L-förmig ausgebildet ist.


**Revendications**

1. Dispositif pour raccorder deux parties d'un tuyau destiné à envoyer du liquide de lavage au lave-glace associé à la lunette arrière prévue dans la porte arrière de la carrosserie d'un véhicule automobile, dans lequel l'une des parties du tuyau s'étend dans une partie de la carrosserie du véhicule qui peut s'écarter de sa position normale d'utilisation, caractérisé en ce que :

a) d'une façon connue en soi, il est prévu deux éléments tubulaires complémentaires (2, 3) dont chacun possède une face d'extrémité sensiblement plate (7, 17), les éléments (2, 3) pouvant être fixés respectivement, en qualité d'éléments terminaux à l'une (S1) et à l'autre (S2) des parties du tuyau, dans un agencement tel que, dans ladite position normale d'utilisation, lesdites faces plates (7, 17) soient mutuellement face à face, et un élément d'étanchéité annulaire (10) est fixé à la face plate (7) de l'un (7) des éléments complémentaires, de sorte que, dans ladite position normale d'utilisation, ledit élément (10) est comprimé entre les faces plates (7, 17) et forme un raccordement étanche entre les deux parties (S1, S2) du tuyau, au moins un (3) des éléments complémentaires comprenant deux parties (13, 14) accouplées télescopiquement l'une à l'autre, dont l'un (14) porte la face d'extrémité plate (17) correspondante, ledit élément (3) étant équipé de moyens élastiques (19) qui tendent à maintenir les deux parties (13, 14) précitées dans la position qui correspond à l'extension axiale maximum de cet élément (3), de sorte que, dans ladite position normale d'utilisation, les moyens élastiques (19) appliquent la face d'extrémité plate (17) dudit élément (3) contre la face d'extrémité plate (7) de l'autre élément complémentaire (2), et

b) au moins l'un (3) des éléments complémentaires est équipé de moyens (22, 23, 24) formant un clapet anti-retour qui peut empêcher le liquide de s'écouler de la partie correspondante (S2) du tuyau lorsque les éléments complémentaires (2, 3) sont espacés l'un de l'autre sous l'effet du mouvement de ladite partie mobile (3) de la carrosserie du véhicule dans le sens qui s'éloigne de sa position normale d'utilisation.

2. Dispositif selon la revendication 1, caractérisé en ce que l'élément d'étanchéité (10) comprend une partie lèvre (12) élastiquement déformable.

3. Dispositif selon la revendication 1 ou la revendication 2, caractérisé en ce que les moyens formant clapet anti-retour constituent un clapet automatique à bille (22, 23, 24).

4. Dispositif selon la revendication 1, caractérisé en ce que chacun des éléments complémentaires (2, 3) porte des pattes élastiques profilées (4, 5) qui permettent de l'encliqueter dans la position assemblée.

5. Dispositif selon la revendication 1, caractérisé en ce que chacun des éléments complémentaires (2, 3) comprend un embout de raccord tubulaire (8, 15) destiné à se raccorder à la partie correspondante (S1, S2) du tuyau.

6. Dispositif selon la revendication 5, caractérisé en ce qu'au moins l'un (3) des éléments complémentaires comprend un embout de raccord tubulaire (15) coudé en L.

# FIG. 1

# FIG. 2